# EUROPÄISCHE PATENTANMELDUNG

(11) **EP 0 918 185 A2**
(43) Veröffentlichungstag der Anmeldung: **26.05.1999**
(21) Anmeldenummer: 98119089.5
(22) Anmeldetag: 09.10.1998
(51) Int. Cl.: F16L 33/02

(54) **Expandierbare Klemmbandvorrichtung**

(30) Priorität: 20.11.1997 CH 2687/97
(71) Anmelder: Hans Oetiker AG Maschinen- und Apparatefabrik, 8812 Horgen (CH)
(72) Erfinder: Oetiker, Hans, 8810 Horgen (CH)
(74) Vertreter: Troesch Scheidegger Werner AG

(57) **Zusammenfassung**

Zum aussengerichteten klemmenden Anordnen bzw. zum Anlegen von Haltekräften an bzw. auf der Innenseite (5) eines rohrförmigen bzw. zylinderförmigen Körpers (3) wird eine Klemmvorrichtung vorgeschlagen, aufweisend eine in ihrem Durchmesser aufweitbare Klemmbandeinrichtung (1) mit einem inneren und einem äusseren Bandabschnitt, welche sich überlappen und welche mittels einer mechanischen Verbindungseinrichtung (11) verbindbar sind. Dabei weist der äussere Bandabschnitt (7) eine längsausgedehnte Haltepartie zum klemmend festlegenden Aufnehmen einer entsprechenden längsausgedehnten Festlegepartie am inneren Bandabschnitt (9) auf, wobei an der Haltepartie entlang der Längsausdehnung Klemmabschnitte vorgesehen sind, welche mittels mindestens eines Werkzeuges bearbeitbar sind, um die Festlegepartie mit der Haltepartie fest zu verbinden.

## Beschreibung

Die vorliegende Erfindung betrifft eine Vorrichtung zum klemmenden Anordnen bzw. Anlegen von Haltekräften an bzw. auf der Innenseite eines rohrförmigen oder zylinderförmigen Körpers, aufweisend eine in ihrem Durchmesser aufweitbare Klemmbandeinrichtung mit einem inneren und äusseren Bandabschnitt, welche sich überlappen, und eine mechanische Verbindungseinrichtung zum Verbinden der beiden Bandabschnitte.

Rohrklemmen, um einen Schlauch auf einem Anschlussstück klemmend zu fixieren oder um eine Rohrverbindung herzustellen, sind bekannt. Diese bekannten Klemmen werden jeweils aussen über den Schlauch oder über ein Rohrstück, diesen bzw. dieses umschliessend, aufgebracht und dann durch Verkleinern des Durchmessers "aufgepresst", um die Verbindung bzw. den Anschluss herzustellen.

Gelegentlich kann es aber auch notwendig sein, analog eine Rohrklemme innenseitig anzubringen, um durch Expansion des Klemmbanddurchmessers, z.B. in einem Rohr, innenseitig ein Verkleidungsstück an der Rohrwandung anzubringen bzw. zu fixieren. Es ist aber auch möglich, auf diese Weise einen Schlauch innenseitig an einem Rohrstutzen, wie beispielsweise einem Auspuffstutzen, einem Zylinderteil und dgl. im Automobilbau zu fixieren.

Hierzu liefert die EP 0 591 648 einen Beitrag, indem hier eine Klemme beschrieben wird, welche durch Aufweiten ihres Durchmessers in Richtung des Aufweitens Haltekräfte erzeugt. Dieses Klemmband wurde vor allem entwickelt, um innenseitig an einem starren Rohrkörper aus Metall, beispielsweise einen Schlauch fest anzuschliessen.

Insbesondere bei Rohrleitungen, Kanalisationen, etc. werden häufig Arbeiten im Innern bzw. Sanierungsarbeiten mittels sogenannter Roboter ausgeführt, wobei innenseitig direkt auf der Rohrwandung auf bzw. an dieser anliegend, z.B. Verbindungsstücke, Reparaturteile, elektrische Kabel, etc. anzuordnen sind, welche fest an der Wandung zu halten sind. Somit würde sich entsprechend die Verwendung der eben beschriebenen Klemmen aufdrängen, mittels welchen die beschriebenen bzw. erwähnten Teile an der Rohrwandung klemmend bzw. pressend festgehalten werden könnten.

Nun liegt ein gewichtiger Nachteil der in der EP 0 591 648 beschriebenen Klemmvorrichtung darin, dass sie lediglich auf einen vorbestimmten Durchmesser expandierbar ist, d.h. der schlussendlich zu erreichende Durchmesser des Klemmbandes ist durch die Art der Konstruktion vorgegeben. Gerade aber bei Kanalisationsrohren, Kunststoffrohren mit grösseren Durchmessern, den unterschiedlich anzubringenden Materialien und Formkörpern, kann der für die Fixierung notwendige Durchmesser des Klemmbandes variieren, so dass die in der EP 0 591 648 beschriebene Klemmbandvorrichtung nicht geeignet ist.

Es ist daher eine Aufgabe der vorliegenden Erfindung, eine expandierbare Klemmbandvorrichtung vorzuschlagen, mittels welcher eine stufenlose Expansion möglich ist, bzw. welche auf unterschiedliche Durchmesser expandiert und klemmend festgelegt werden kann. Erfindungsgemäss wird die gestellte Aufgabe mittels einer Vorrichtung gemäss dem Wortlaut nach Anspruch 1 gelöst.

Vorgeschlagen wird eine Vorrichtung zum klemmenden Anordnen bzw. zum Anlegen von Haltekräften an bzw. auf der Innenseite eines rohrförmigen oder zylinderförmigen Körpers, welche analog der Klemmvorrichtung der EP 0 591 648 eine in ihrem Durchmesser aufweitbare Klemmbandeinrichtung aufweist mit einem inneren und äusseren Bandabschnitt, welche sich überlappen sowie mit einer mechanischen Verbindungseinrichtung zum Verbinden der beiden Bandabschnitte.

Im Gegensatz zu der Klemmvorrichtung gemäss der EP 0 591 648 weist die erfindungsgemässe Klemmbandeinrichtung am äusseren Bandabschnitt eine längsausgedehnte Haltepartie zum klemmend festlegenden Aufnehmen einer entsprechenden längsausgedehnten Festhaltepartie am inneren Bandabschnitt auf, wobei an der Haltepartie entlang der Längsausdehnung Klemmabschnitte vorgesehen sind, welche mittels mindestens eines Werkzeuges bearbeitbar sind, um die Festlegepartie mit der Haltepartie fest zu verbinden.

Bevorzugte Ausführungsvarianten der erfindungsgemässen Vorrichtung sind in den abhängigen Ansprüchen 2 bis 7 charakterisiert.

Analog der Klemmvorrichtung in der EP 0 591 648 wird auch in der vorliegenden Erfindung die Ausbildung eines sogenannt stufenlosen Ueberganges im sich überlappenden Bereich des inneren und des äusseren Bandabschnittes gemäss dem Wortlaut nach Anspruch 8 vorgeschlagen. Auch hierzu weitere bevorzugte Ausführungsvarianten sind in den abhängigen Ansprüchen 9 und folgende charakterisiert.

Die Erfindung wird nun anschliessend beispielsweise und unter Bezug auf die beigefügten Figuren näher erläutert.

Dabei zeigen:
- Fig. 1: im Querschnitt schematisch im montierten Zustand dargestellt eine erfindungsgemässe Klemmbandeinrichtung im klemmend festlegenden Zustand,
- Fig. 2: die beiden Endabschnitte der Klemmeinrichtung aus Fig. 1 im auseinandergezogenen Zustand und von oben gesehen,
- Fig. 3: die beiden auseinandergezogenen Endabschnitte aus Fig. 2 im Querschnitt bzw. in Seitenansicht,
- Fig. 4: die Verbindung der Klemmeinrichtung aus Fig. 1 bzw. die beiden Endabschnitte aus Fig. 2 und 3 in klemmend zusammengefügtem Zustand in Ansicht von oben,
- Fig. 5: eine weitere Ausführungsvariante der erfindungsgemässen Klemmbandeinrichtung in im Innern eines Rohres festklemmend angeordnetem Zustand,
- Fig. 6: die beiden Endabschnitte der Klemmbandeinrichtung aus Fig. 5 in auseinandergezogenem Zustand und von oben gesehen,
- Fig. 7: die beiden Bandabschnitte aus Fig. 6 im Querschnitt bzw. in Seitenansicht,
- Fig. 8: die Verbindung der Klemmbandeinrichtung aus Fig. 5 bzw. die beiden Bandabschnitte aus Fig. 6 und 7 in klemmend festgelegtem Zustand in Ansicht von oben,
- Fig. 9: wiederum eine weitere Ausgestaltung der erfindungsgemässen Klemmbandeinrichtung in im Innern eines Rohres festklemmend montiertem Zustande, aufweisend einen stufenlosen Uebergang vom inneren zum äusseren Bandabschnitt,
- Fig. 9a: in Vergrösserung dargestellt den stufenlosen Uebergang vom inneren zum äusseren Bandabschnitt,
- Fig. 10: die Bandabschnitte der Klemmbandeinrichtung aus Fig. 9 in auseinandergezogenem Zustand und in Ansicht von oben,
- Fig. 11: die Bandabschnitte aus Fig. 10 im Querschnitt bzw. in Seitenansicht,
- Fig. 12: die Verbindung der Klemmbandeinrichtung aus Fig. 9 bzw. die Bandabschnitte aus Fig. 10 und 11 in festklemmend montiertem Zustand in Ansicht von oben,
- Fig. 13: eine weitere Ausgestaltung der Verbindung der Klemmbandeinrichtung analog derjenigen aus den Fig. 9 bis 12, in Ansicht von oben,
- Fig. 14: wiederum eine weitere Ausführungsvariante der erfindungsgemässen Klemmbandeinrichtung in im Innern eines Rohres festklemmend angeordnetem Zustand, aufweisend einen stufenlosen Uebergang vom inneren zum äusseren Bandabschnitt,
- Fig. 14a: in Vergrösserung den stufenlosen Uebergang vom inneren zum äusseren Bandabschnitt,
- Fig. 15: die beiden Bandabschnitte aus Fig. 14 in auseinandergezogenem Zustand in Ansicht von oben,
- Fig. 16: die beiden Bandabschnitte aus Fig. 15 im Querschnitt bzw. in Seitenansicht, und
- Fig. 17: die Verbindung der Klemmbandeinrichtung aus Fig. 14 bzw. die beiden Bandabschnitte der Fig. 15 und 16 in festklemmend zusammengefügtem Zustand in Ansicht von oben.

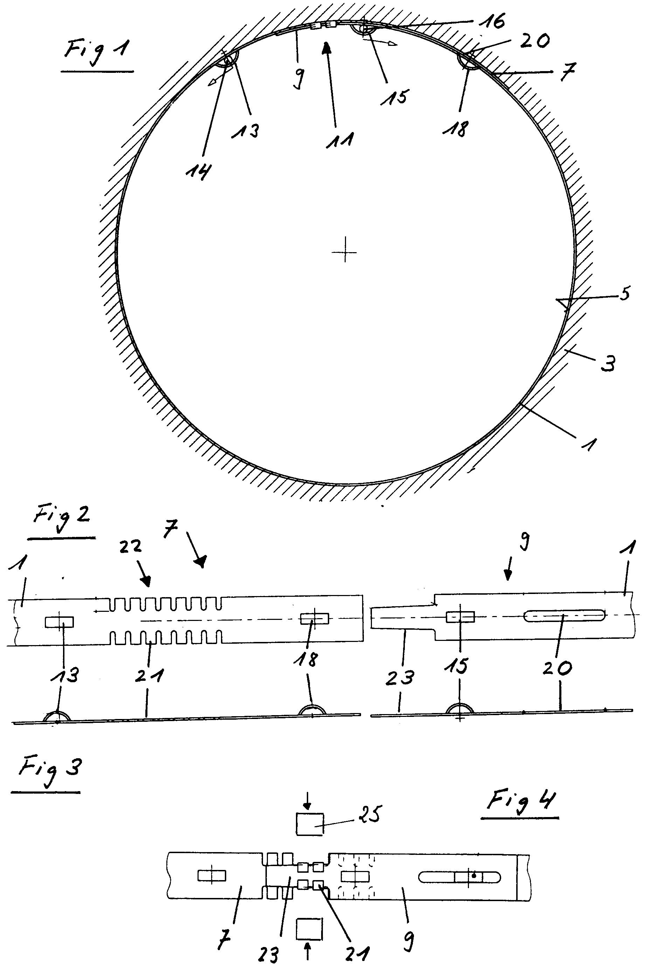

Fig. 1 zeigt im Innern eines Rohres bzw. eines zylinderförmigen Körpers 3 eine erfindungsgemäss ausgebildete Klemmbandeinrichtung, aufweisend ein Klemmband 1, welches sich entlang der inneren Oberfläche 5 des Rohres bzw. des Zylinders 3 erstreckt. Dieses Klemmband 1 weist zwei sich überlappende Bandabschnitte auf, nämlich einen äusseren Bandabschnitt 7 sowie einen inneren Bandabschnitt 9. Im Bereich der sich überlappenden Bandabschnitte ist eine Verbindungseinrichtung 11 vorgesehen, um die beiden Bandabschnitte 7 und 9 fest miteinander zu verbinden.

Wenn nun im Inneren eines Rohres, wie beispielsweise eines Kanalisationsrohres, einer Transportleitung, einer Druckwasserleitung, etc. aus irgendwelchen Gründen Rohrmuffen, Dichtungsmaterialien, Flachkabel, etc. anzuordnen sind, geschieht dies in der Regel, indem diese Reparatur in der Leitung oder andere Materialien in der Rohrleitung mittels Robotern durchgeführt bzw. eingeführt werden. Damit diese Reparatur durchgeführt bzw. anderen Materialien im Innern der Rohrleitung befestigt werden können, ist es nun notwendig, beispielsweise die erfindungsgemäss definierten Klemmbandeinrichtungen zu verwenden. Um diese Klemmbandeinrichtungen aber ebenfalls in einer Rohrleitung einführen zu können, ist ein derartiges Klemmband, wie in Fig. 1 dargestellt, beispielsweise mit Halteösen bzw. Werkzeugeingriffshaken 13 und 15 versehen. Beispielsweise mit Hilfe von sogenannten Haltebolzen 14 und 16 kann ein derartiges Klemmband mittels des Roboters in die anzuordnende Position gebracht werden, worauf anschliessend wiederum mittels dieser beiden Haken 13 und 15 bzw. der beiden Bolzen 14 und 16 der Durchmesser des Klemmbandes 1 aufgeweitet werden kann, bis ein genügender Halte- bzw. Anpressdruck gegen das Innere des Rohres bzw. Zylinders erzeugt worden ist. Sobald die Aufweitung bzw. Expansion des Klemmbandes 1 abgeschlossen ist, werden die beiden Bandabschnitte 7 und 9 mittels der Verbindungseinrichtung 11 fest miteinander verbunden. Damit sowohl beim Transport der Klemmbandeinrichtung ins Innere des Rohres wie auch während dem Expansionsvorgang die beiden Bandabschnitte 7 und 9 nicht seitlich voneinander abrutschen können, weist der äussere Abschnitt vorzugsweise einen nach innen ragenden, laschenartigen Haken 18 auf, welcher in einer entsprechenden, längsausgedehnten schlitzartigen Oeffnung 20 des inneren Bandabschnittes geführt ist.

Unter Bezug auf die nachfolgenden Fig. 2 bis 4 soll nun das Festlegen der erfindungsgemässen Klemmbandeinrichtung näher erläutert werden. Zu diesem Zweck sollen zunächst noch einmal die einzelnen Teile der beiden Bandabschnitte 7 und 9 anhand der beiden Fig. 2 und 3 näher erläutert werden. Der äussere Bandabschnitt 7, welcher das eine Ende des Klemmbandes 1 bildet, weist eine längsausgedehnte Haltepartie 22 auf, aufweisend je entlang der Randpartie eine Vielzahl von in Längsrichtung voneinander beabstandeter Haltelaschen 21. Ebenfalls erkennbar sind der Werkzeugeingriffshaken 13 sowie der Führungshaken 18.

Der innere Bandabschnitt 9, welcher das entgegengesetzte Ende des Klemmbandes 1 bildet, weist endständig eine längsausgedehnte Festlegepartie auf, welche durch eine konisch ausgebildete Endlasche 23 gebildet wird. Ebenfalls erkennbar ist der weitere Werkzeugeingriffshaken 15 sowie der längsausgedehnte Führungsschlitz 20.

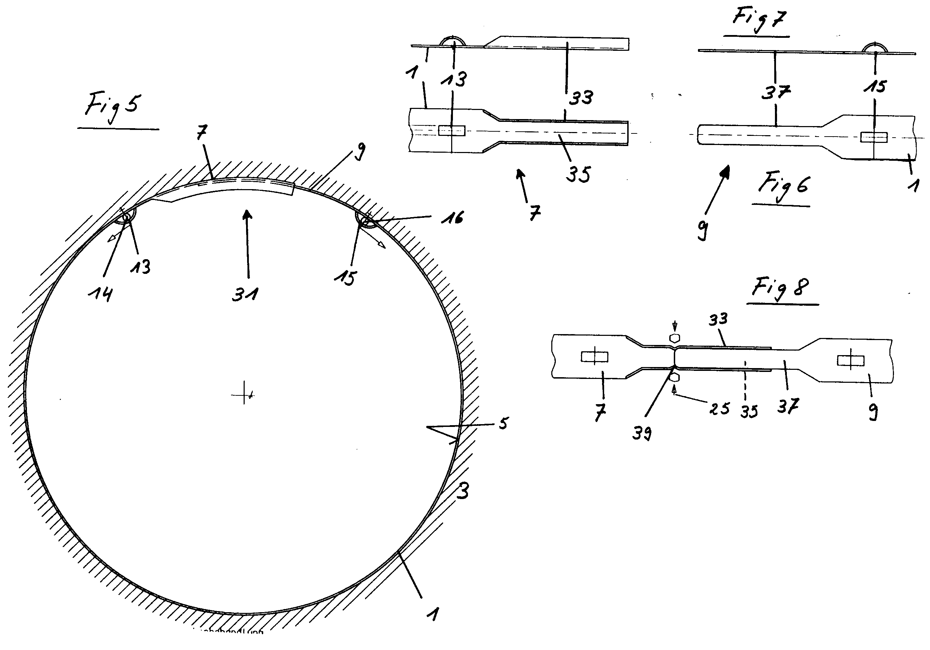

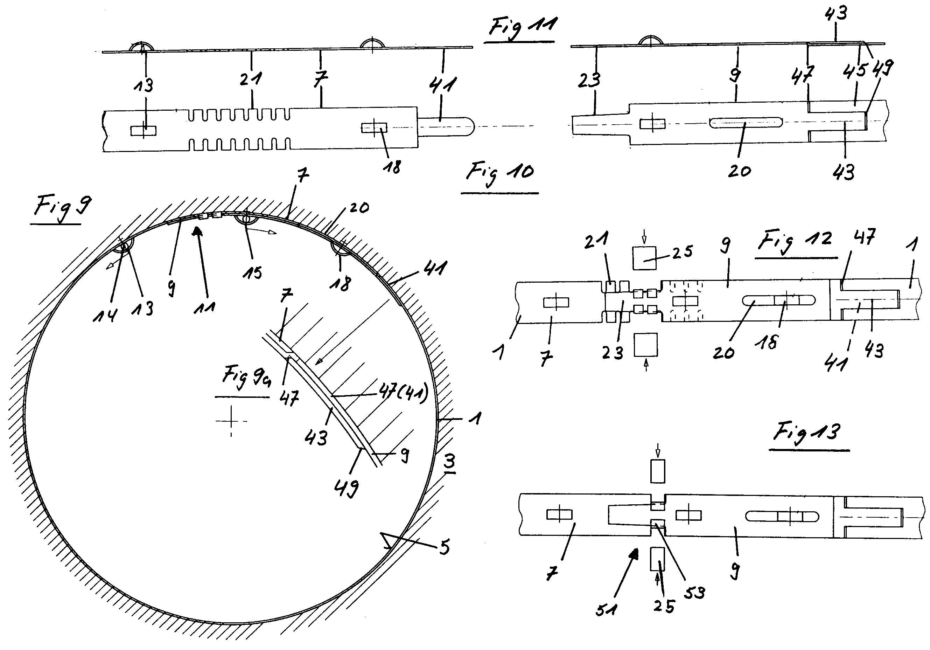

Beim Einführen der Klemmbandeinrichtung in das Rohr bzw. den Zylinder 3 wird durch den Eingriff des Führungshakens 18 im Führungsschlitz 20 sichergestellt, dass sich die beiden Bandabschnitte 7 und 9 überlappen. Sobald die Klemmbandeinrichtung am richtigen Ort positioniert ist, werden, wie bereits oben erwähnt, die beiden Bandabschnitte 7 und 9 mittels Werkzeugen 14 bzw. 16 durch Angriff in den beiden Werkzeugeingriffshaken 13 und 15 voneinander getrieben, bis ausreichende Haltekräfte erzeugt worden sind. Sobald dies erreicht ist, werden, wie in Fig. 4 schematisch dargestellt, mittels eines oder mehrerer Werkzeuge 25 mindestens ein Teil der Haltelaschen 21 auf und nach innen gebogen, um die konische Endlasche 23 festklemmend zu halten bzw. um die beiden Bandabschnitte 7 und 9 fest miteinander zu verbinden. Infolge der konischen Ausbildung der Endlasche 23 ist nun sichergestellt, dass der innere Bandabschnitt nicht mehr gegen den äusseren Bandabschnitt gleiten bzw. rutschen kann. Somit ist die Klemmbandeinrichtung definitiv festgelegt und die an der inneren Oberfläche 5 des Rohres 3 anzuordnenden Materialien bzw. Rohrschellen, Muffen, Dichtungsmaterialien, Kabel, usw. werden fest auf dieser inneren Oberfläche gehalten.

In Fig. 5 wird eine weitere Ausführungsvariante der erfindungsgemässen Klemmbandeinrichtung in montiertem Zustand dargestellt, d.h. angeordnet auf der inneren Oberfläche 5 eines Rohres oder Zylinders 3. Wiederum überlappen sich die beiden endständig am Klemmband 1 angeordneten Abschnitte 7 und 9 und werden mittels einer gegenüber der Ausführung in den Fig. 1 bis 4 modifizierten Verbindungseinrichtung 31 fest miteinander verbunden.

Das Einführen der Klemmbandeinrichtung sowie das Expandieren erfolgt analog der Klemmbandeinrichtung in den Fig. 1 bis 4. Unter Bezug auf die nachfolgenden Fig. 6 bis 8 wird erneut das Erstellen der festen Verbindung zwischen den beiden Bandabschnitten 7 und 9 näher erläutert.

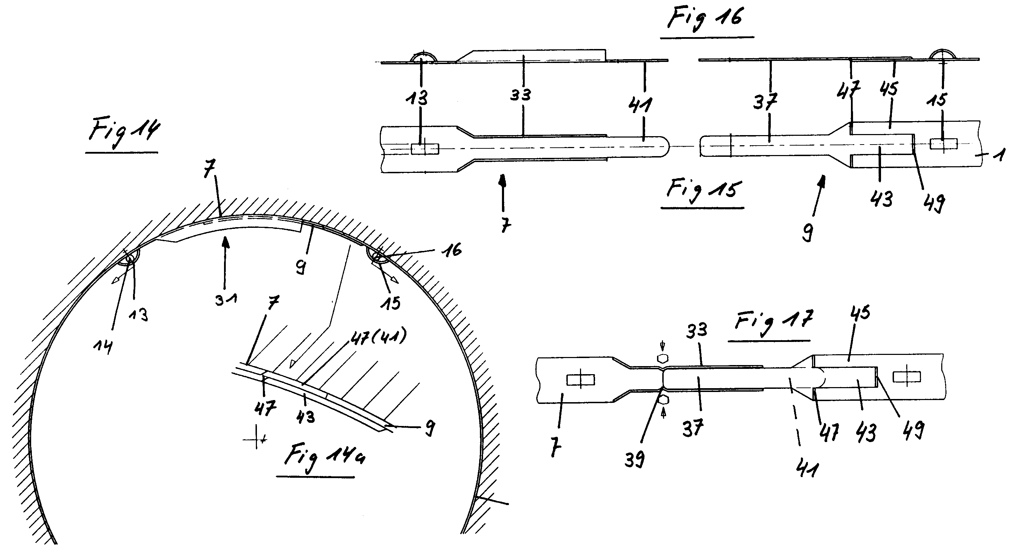

Dabei ist in den Fig. 6 und 7 erkennbar, dass der äussere Bandabschnitt endständig je seitlich aufgebogene Randpartien 33 aufweist, womit in diesem Bereich quasi ein Kanal 35 ausgebildet ist. Um in diesem Kanal eingeführt zu werden, weist entsprechend der innere Bandabschnitt 9 eine endständige Endlasche 37 auf, welche nun aber im Gegensatz zur Endlasche 23 in Fig. 2 bis 4 nicht konisch ausgebildet ist.

Wie insbesondere in Fig. 5 erkennbar ist, weist die Klemmbandeinrichtung der Fig. 5 bis 8 keine Führungslasche 18 und entsprechend keinen Führungsschlitz 20 auf, da ein seitliches Voneinandergleiten bzw. Rutschen der beiden Bandabschnitte 7 und 9 durch das Einführen der Endlasche 37 im Kanal 35 nicht möglich ist. Nach erfolgter Positionierung der erfindungsgemässen Klemmbandeinrichtung, entsprechend Fig. 5, wird erneut durch Anlegen eines oder mehrerer Werkzeuge an den Werkzeugeingriffshaken 13 und 15 der Durchmesser des Klemmbandes 1 so lange expandiert, bis ausreichende Haltekräfte erzielt worden sind. Nun wird mittels eines weiteren Werkzeuges 25 die Kanalwandung 33 je beidseits eingekerbt oder eingebuchtet, wie dies in Fig. 8 schematisch dargestellt ist. Dies kann entweder endständig zur Lasche 37 erfolgen, oder aber im Bereich, in welchem sich die Lasche 37 im Kanal 35 erstreckt. Durch diese Einkerbung 39 wird nun sichergestellt, dass die Lasche 37 nicht weiter in den Kanal 35 hineingleiten kann, und somit ist die Klemmbandeinrichtung endgültig montiert.

Wie insbesondere in den Fig. 1 und 5 erkennbar, ergibt sich bei den entsprechenden Klemmbandeinrichtungen in den Fig. 1 und 5 keine stufenlose Ueberlappung der beiden Bandabschnitte. Mit anderen Worten ergibt sich in beiden Fällen in der äusseren Oberfläche der Klemmbandeinrichtung eine Abstufung, was gelegentlich nachteilig bzw. störend sein kann. Entsprechend werden in den Ausführungsvarianten der nachfolgenden Fig. 9 bis 17 sogenannte stufenlose Ueberlappungen vorgeschlagen, wie sie bereits aus der EP 0 591 648 bekannt sind.

In den Fig. 9 bis 13 ist eine Klemmbandeinrichtung dargestellt, welche zunächst eine Verbindungseinrichtung 11 aufweist, analog derjenigen, dargestellt in den Fig. 1 bis 4. Aus diesem Grunde kann auf eine Wiederholung des Expansionsvorganges des Klemmbandes 1 und der Erstellung der mechanischen Verbindung zwischen dem äusseren und dem inneren Bandabschnitt 7 und 9 an dieser Stelle verzichtet werden resp. es wird auf die entsprechende Beschreibung unter Bezug auf die Fig. 1 bis 4 verwiesen. In Fig. 9 ist wiederum die Klemmbandeinrichtung in im Innern eines Rohres montiertem Zustand dargestellt, wobei der eben erwähnte, stufenlose Uebergang der beiden Bandabschnitte 7 und 9 in Fig. 9a vergrössert dargestellt ist. Zum besseren Verständnis dieses stufenlosen Ueberganges sei auf die Fig. 10 bis 12 verwiesen, wo die entsprechende, konstruktive Ausgestaltung anhand der Einzelteile bzw. des vergrösserten Ausschnittes der überlappenden Verbindung der beiden Abschnitte 7 und 9 dargestellt ist.

Zunächst umfasst der äussere Bandabschnitt 7 endständig ein zungenförmiges Element 41, welches insbesondere in den Fig. 10 und 11 erkennbar ist. Im äusseren Bandabschnitt 9 ist in Bandrichtung vom Führungsschlitz 20 beabstandet das Band stufig ausgebildet, aufweisend eine erste Stufe 47, in welcher die beiden Randbereiche des Bandes stufig ausgebildet sind sowie eine zweite Stufe 49, bei welcher der Mittelabschnitt des Bandes eine Stufe aufweist. Durch diese voneinander in Längsrichtung beabstandete zweiteilige Abstufung des Bandes ergibt sich eine Art mittiger Kanal 43, welcher aus der Bandebene nach innen versetzt vorragt. Demgegenüber sind im Bereich dieses quasi Kanales 43 die beiden äusseren Bandabschnitte 45 in der ursprünglichen äusseren Bandebene verlaufend ausgebildet.

Beim Zusammenfügen der beiden Bandabschnitte 7 und 9 wird nun das zungenförmige Element 41 in den mittigen kanalförmigen Abschnitt 43 eingeschoben, und da die Abstufungen 47 und 49 in ihrer Höhe in etwa der Dicke des Bandmaterials entsprechen, liegen somit die beiden Bandabschnitte 7 und 9 praktisch distanzlos aufeinander. In Fig. 12 sind die beiden Bandabschnitte 7 und 9 im verbundenen Zustand dargestellt, analog der Darstellung in Fig. 4. Lediglich ist zusätzlich der Bereich der stufenlosen Verbindung erkennbar, wobei das zungenförmige Element 41 nicht erkennbar ist, da es durch das nach innen ragende Bandmaterial des "Kanals" 43 bzw. der Zungenführung 43 verdeckt wird. Aus den Fig. 9 bis 12 ist aber unschwer erkennbar, dass somit in diesem Bereich des stufenlosen Ueberganges das zungenförmige Element 41 des äusseren Bandabschnittes in das Bandmaterial des inneren Bandabschnittes eingreift, wobei in diesem Bereich die beiden Bandabschnitte im wesentlichen in der gleichen Ebene liegen. Insbesondere in Fig. 9a ist deutlich erkennbar, dass nun die Verbindung zwischen den beiden Bandabschnitten 7 und 9 stufenlos ausgestaltet ist, und somit ein an die Innenwandung des Rohres zu pressender bzw. zu haltender Gegenstand durch eine allfällige Abstufung nicht mehr verletzt werden kann, da diese Abstufung nicht mehr vorhanden ist.

Eine ähnliche Verbindung ist in Fig. 13 analog Fig. 12 dargestellt, wobei jedoch aus dem äusseren Bandabschnitt nicht bereits schon vor dem Verbinden der beiden endständigen Bandabschnitte Haltelaschen 21 ausgestanzt sind, sondern diese Haltelaschen erst beim Verbinden der beiden Bandabschnitte mittels eines Werkzeuges 25 geschaffen werden. Mit anderen Worten weist der äussere Bandabschnitt 7 vor der Montage ein volles Band auf, und die einzelnen Haltelaschen 53 werden erst beim Verbindungsvorgang ausgestanzt, um eine mechanische Verbindung 51 zwischen den beiden Bandabschnitten herzustellen.

In den Fig. 14 bis 17 wird analog eine stufenlose Verbindung zwischen den beiden Bandabschnitten 7 und 9 dargestellt, jedoch aufweisend eine Verbindungseinrichtung 31 analog derjenigen, dargestellt in den Fig. 5 bis 8. Im Unterschied zur Klemmbandeinrichtung in den Fig. 5 bis 8 weist nun diejenige, dargestellt in den Fig. 14 bis 17, wiederum einen stufenlosen Uebergang zwischen den beiden Bandabschnitten 7 und 9 auf, analog demjenigen, dargestellt in den Fig. 9 bis 13. Dabei zeigt insbesondere Fig. 14a in Vergrösserung den Bereich des stufenlosen Ueberganges.

In Abänderung zur Klemmbandeinrichtung in den Fig. 5 bis 8 weist die vorliegende Klemmbandeinrichtung einen äusseren Bandabschnitt 7 auf, aufweisend wiederum ein endständiges zungenförmiges Element 41, vorgesehen, um in einer Aussparung bzw. einem Kanal oder einer Längsaufnahme 43 im inneren Bandabschnitt 9 einzugreifen. Dieser Bereich 43 wird wiederum gebildet durch die doppelte Abstufung des inneren Bandabschnittes 9. Dabei zeigen die Fig. 15 und 16 je den äusseren und inneren Bandabschnitt 7 und 9 in getrennter Darstellung, währenddem in Fig. 17 die beiden Bandabschnitte im definitiv verbundenen Zustand dargestellt sind, wobei das in die Längsführung 43 eingeführte, zungenförmige Element 41 gestrichelt dargestellt ist, da es in dieser Ansicht an sich nicht sichtbar ist.

Bei den in den Fig. 1 bis 17 dargestellten erfindungsgemässen Klemmbandeinrichtungen, mechanischen Verbindungen der beiden Bandabschnitte 7 und 9 sowie weiteren Konstruktionselementen handelt es sich selbstverständlich nur um Beispiele, welche in x-beliebiger Art und Weise abgeändert, modifiziert oder ergänzt werden können. Insbesondere ist z.B. die Materialwahl für die Herstellung der Klemmbandeinrichtungen kein Thema der vorliegenden Erfindung. Hierfür können beispielsweise rostfreier Stahl, Stahlblech oder gar speziell hochwertig verstärkte Kunststoffbänder verwendet werden. Auch ist es unerheblich, ob im äusseren Bandabschnitt die Haltelaschen 21 bereits vor der Montage voneinander getrennt bzw. beabstandet gestanzt vorbereitet sind, oder ob diese Haltelaschen erst während der Montage erstellt werden. In einer bevorzugten Ausführungsvariante ist es gar möglich, diese Haltelaschen bereits vor der Montage leicht aus der Bandebene nach innen gebogen auszugestalten, damit bei der Montage ein Werkzeug leichter an bzw. in diese Haltelaschen eingreifen kann, um sie einwärts biegen zu können für das klemmende Fixieren der konischen Endlasche. In diesem Falle jedoch ist vorzugsweise das Band des inneren Bandabschnittes hinter der konischen Endlasche ebenfalls seitlich je leicht aufgebogen ausgebildet, damit beim überlappenden Zusammenfügen der beiden Bandabschnitte die bereits etwas aufgebogenen Haltelaschen nicht wieder in die Bandebene zurückgetrieben werden.

In bezug auf die stufenlose Ausgestaltung der Verbindung zwischen dem äusseren und dem inneren Bandabschnitt ist weiter zu ergänzen, dass diese stufenlose Konstruktion, dargestellt in den Fig. 9 und folgende lediglich ein Beispiel darstellt, und dass z.B. diese stufenlose Ausgestaltung auch an dem der mechanischen Verbindung gegenüberliegenden Ende ausgestaltet werden kann. Grundsätzlich ist zu erwähnen, dass an sich die Grundidee der Expansion eines Klemmbandes zum Erzeugen von nach aussen gerichteten Haltekräften aus der EP 0 591 648 bekannt ist, und somit weitere konstruktive Elemente, Ideen, Angaben über Materialwahl, etc., welche der erfindungsgemässen Ausgestaltung einer Klemmbandeinrichtung dienlich sind, ebenfalls Bestandteil der vorliegenden Anmeldung bzw. eines allfällig zu erteilenden Patentes sind. In diesem Zusammenhang erwähnenswert sind beispielsweise Anschlagspartien an den Bandabschnitten, die eine zu starke Expansion bzw. Vergrösserung des Durchmessers des Klemmbandes bei der Montage verbinden.

Erfindungswesentlich ist, dass die beiden endständigen Bandabschnitte im sich überlappenden Bereich je eine Partie aufweisen, welche mechanisch miteinander verbindbar sind und zwar derart, dass die Verbindung in Längsrichtung stufenlos erfolgen kann.

## Patentansprüche

1. Vorrichtung zum klemmenden Anordnen bzw. zum Anlegen von Haltekräften an bzw. auf der Innenseite eines rohrförmigen bzw. zylinderförmigen Körpers, aufweisend eine in ihrem Durchmesser aufweitbare Klemmbandeinrichtung mit einem inneren und einem äusseren Bandabschnitt (7, 9), welche sich überlappen und eine mechanische Verbindungseinrichtung (11, 31) zum Verbinden der beiden Bandabschnitte, dadurch gekennzeichnet, dass der äussere Bandabschnitt eine längsausgedehnte Haltepartie (22, 33) zum klemmend festlegenden Aufnehmen einer entsprechenden längsausgedehnten Festlegepartie (23, 37) am inneren Bandabschnitt aufweist, wobei an der Haltepartie entlang der Längsausdehnung Klemmabschnitte vorgesehen sind, welche mittels mindestens eines Werkzeuges bearbeitbar sind, um die Festlegepartie mit der Haltepartie fest zu verbinden.

2. Vorrichtung, insbesondere nach Anspruch 1, dadurch gekennzeichnet, dass am inneren und äusseren Bandabschnitt nahe an der Haltepartie bzw. der Festlegepartie je von der Verbindungseinrichtung in Klemmbandeinrichtung beabstandet, vom Band nach innen ragende Werkzeugeingriffseinrichtungen (13, 15) vorgesehen sind, an welchen eingreifend mittels des mindestens einen Werkzeuges (14, 16) durch Voneinandertreiben der Eingriffseinrichtungen der Durchmesser des Klemmbandes (1) aufweitbar bzw. aufweitend spannbar ist, um nach aussen wirkende Haltekräfte zu erzeugen.

3. Vorrichtung, insbesondere nach einem der Ansprüche 1 oder 2, dadurch gekennzeichnet, dass im äusseren Abschnitt (7) ein nach innen ragendes und in Bandlängsrichtung verlaufendes laschenartiges Element (18) vorgesehen ist, welches in einer entsprechenden längsausgedehnten, schlitzartigen Oeffnung (20) im inneren Bandabschnitt (9) eingreift.

4. Vorrichtung, insbesondere nach einem der Ansprüche 1 bis 3, dadurch gekennzeichnet, dass die Haltepartie je entlang der beiden Bandränder voneinander getrennte, aufbiegbare Haltelaschen (21) aufweist, und dass die Festlegepartie endständig am inneren Bandabschnitt durch eine sich konisch verjüngende Endlasche (23) gebildet wird, welche durch die aufbiegbaren Haltelaschen derart festlegbar ist, indem nach Expansion bzw. Aufweiten des Durchmessers des Klemmbandes je beidseits der Endlasche (23) die Haltelaschen (21) mittels eines weiteren Werkzeuges (25) nach innen auf- und einwärts gebogen werden, um die Endlaschen zwischen je zwei am Band sich gegenüberliegenden Haltelaschen klemmend festzuhalten.

5. Vorrichtung, insbesondere nach Anspruch 4, dadurch gekennzeichnet, dass im nicht festgelegten Zustand die Haltelaschen (21) leicht aus der Bandebene nach innen auf- bzw. angebogen sind, um einen besseren Angriff für das weitere Werkzeug (25) zu bieten, und dass vorzugsweise das Klemmband anschliessend an die Endlasche (23) am inneren Bandabschnitt je entlang des Seitenrandes ebenfalls leicht an- bzw. aufgebogen ist, um die an- bzw. aufgebogenen Haltelaschen beim überlappenden Anordnen der beiden Bandabschnitte nicht in die Bandebene zurückzutreiben.

6. Vorrichtung, insbesondere nach einem der Ansprüche 1 bis 3, dadurch gekennzeichnet, dass die Haltepartie kanalförmig ausgebildet ist, mit je seitlich aufgebogenen längsausgedehnten Klemmbandrandpartien (33), und dass endständig am inneren Bandabschnitt eine längsausgedehnte Endlasche (37) vorgesehen ist, mit wenigstens nahezu konstanter Breite, welche in etwa der inneren Breite des Kanals (35) entspricht und welche im Inneren des Kanals dadurch festlegbar ist, indem nach Expansion bzw. Aufweiten des Durchmessers des Klemmbandes (1) je beidseits des Kanals je die Randpartien (33) mittels eines weiteren Werkzeuges (25) die Kanalbreite verjüngend eingekerbt oder eingebogen werden, um die Endlasche (37) im Kanal (35) klemmend festzuhalten.

7. Vorrichtung, insbesondere nach Anspruch 6, dadurch gekennzeichnet, dass die Kanalwandungen bzw. die aufgebogenen Randpartien (33) leicht kanaleinwärts gebogen ausgebildet sind, um ein bandeinwärts Ausbrechen der Endlasche (37) aus dem Kanal (35) zu verhindern.

8. Vorrichtung, insbesondere nach einem der Ansprüche 1 bis 7, dadurch gekennzeichnet, dass zum Ausbilden eines stufenlosen Ueberganges entlang der äusseren Oberfläche des Klemmbandes (1) im Bereich der sich überlappenden Bandabschnitte endständig am äusseren Bandabschnitt (7) eine zungenartige Einrichtung (41) angeordnet ist, vorgesehen um in eine Zugaufnahmeeinrichtung (43) im inneren Bandabschnitt (9) einzugreifen, welche von der Festlegepartie in Bandrichtung wenigstens nahezu beabstandet angeordnet ist.

9. Vorrichtung, insbesondere nach Anspruch 8, dadurch gekennzeichnet, dass die zungenartige Einrichtung bzw. Verlängerung (41) zum Eingriff in die Zungenaufnahmeeinrichtung (43) im inneren Bandabschnitt (9) vorgesehen ist, wobei die Zungenaufnahmeeinrichtung an einem ersten stufenartigen Abschnitt (47) beginnt, wobei neben der mittig angeordneten Zungenaufnahmeeinrichtung seitliche Bandabschnitte (45) verbleiben, wobei der erste stufenförmige Abschnitt (47) die auf beiden Seiten der mittig angeordneten Zungenaufnahmeeinrichtung (43) verbleibenden seitlichen Bandteile (45) radial nach innen um ein Mass versetzt sind, das im wesentlichen der Dicke des Klemmbandes (1) entspricht, und wobei die Zungenaufnahmeeinrichtung (43) mindestens teilweise von einem mittig angeordneten Kanal gebildet ist, der in einem zweiten stufenförmigen Abschnitt (49) endet.

10. Vorrichtung, insbesondere nach einem der Ansprüche 1 bis 9, dadurch gekennzeichnet, dass eine Einrichtung vorgesehen ist, die beim Spannen der Klemmenstruktur ein Ueberdehnen verhindert.

11. Anordnung, aufweisend eine Klemmvorrichtung nach einem der Ansprüche 1 bis 10, zum Befestigen eines ersten Bauteils an einem zweiten Bauteil (3), wobei das zweite Bauteil eine zur Aussenfläche des Klemmbandes im wesentlichen parallele Innenfläche (5) aufweist, das erste Bauteil längs der Innenfläche (5) des zweiten Bauteile (3) angeordnet und die Klemmvorrichtung an der Innenfläche des ersten Bauteile derart angelegt wird, dass sie unter Aufweitung des Durchmessers der Klemmvorrichtung bzw. des Klemmbandes das erste Bauteil am zweiten Bauteil (3) hält, und wobei das zweite Bauteil vorzugsweise eine Ringnut aufweist, in die das erste Bauteil beim Einbau der Klemmvorrichtung bzw. des Klemmbandes unter Aufweitung hineingedrückt wird.
